# EUROPEAN PATENT SPECIFICATION

(11) **EP 3 502 636 B1**
(45) Date of publication and mention of the grant of the patent: **26.10.2022**
(21) Application number: 17209820.4
(22) Date of filing: 21.12.2017
(51) Int. Cl.: G01J 1/44

(54) **SYSTEM AND METHOD FOR TIME-CORRELATED PHOTON-NUMBER-RESOLVED COUNTING APPLICATIONS**
SYSTEM UND VERFAHREN FÜR ZEITKORRELIERTE PHOTONENZAHLAUFGELÖSTE ZÄHLANWENDUNGEN
SYSTÈME ET PROCÉDÉ POUR APPLICATIONS DE COMPTAGE RÉSOLUES PAR NOMBRE DE PHOTONS À CORRÉLATION TEMPORELLE

(43) Date of publication of application: 26.06.2019
(73) Proprietor: PicoQuant Innovations GmbH, 12489 Berlin (DE)
(72) Inventor: Erdmann, Rainer, 12621 Berlin (DE); Wahl, Michael, 12587 Berlin (DE); Rahn, Hans-Jürgen, 12527 Berlin (DE)
(74) Representative: Schulz Junghans Patentanwälte PartGmbB

(56) References cited:
- SOUKKA J M ET AL: "OPTIMIZATION OF MULTI-PHOTON EVENT DISCRIMINATION LEVELS USING POISSON STATISTICS", OPTICS EXPRESS, OSA PUBLISHING, US, vol. 12, no. 1, 12 November 2004 (2004-11-12), pages 84-89, XP008079832, ISSN: 1094-4087, DOI: 10.1364/OPEX.12.000084
- Michael Wahl: "The Principle of Time-Correlated Single Photon Counting", PicoQuant Technical Note, 24 June 2014 (2014-06-24), pages 1-14, XP055135297, Retrieved from the Internet: URL:http://www.picoquant.com/images/upload s/page/files/7253/technote_tcspc.pdf [retrieved on 2014-08-19]
- Michael Wahl ET AL: "Time Tagged Time-Resolved Fluorescence Data Collection in Life Sciences", , 31 March 2017 (2017-03-31), XP055486396, Retrieved from the Internet: URL:https://www.picoquant.com/images/uploa ds/page/files/14528/technote_tttr.pdf [retrieved on 2018-06-20]

## Description

The invention relates to a system and a method for time-correlated photon-number-resolved counting applications, a digital file structure for storing data from time-correlated photon-number-resolved counting measurements and a method for automatically adjusting the system in time-correlated photon-number-resolved counting applications.

In the state-of-the-art time-correlated single-photon counting (TCSPC) applications are well established. TCSPC applications for fluorescence lifetime measurements typically involve a pulsed excitation source and a detector that is capable of detecting single photons. However, there are also TCSPC applications that exploit a continuous light source, for example in anti-bunching experiments correlating the outputs of two detectors. A variety of single-photon detectors is known, such as for example single-photon avalanche diodes (SPADs), hybrid photon detectors (HPD), or superconducting nanowire single-photon detectors (SNSPD). These detectors comprise a comparably high sensitivity for single photons, exhibit reasonable dead times and temporal resolution.

M. Wahl, "The principle of Time-Correlated Single-Photon Counting", PicoQuant Technical Note 24, June 2014, XP055135297, provides an overview of TCSPC-systems and their underlying electronics.

M. Wahl et al. "Time tagged time-resolved Fluorescence Data Collection in Life Sciences", 31 March 2017 (2017-03-31), XP055486396, teaches efficient digital file structures that are adapted for recording and storing of TCSPC data.

However, with increasing photon count rates the inter-photon distance, i.e. the temporal spacing between two subsequently arriving photons, decreases.

Therefore, if the detector design permits, the probability that two photons are detected within a very short time interval, particularly within the temporal or pulse pair resolution of the detector, increases. As each detected photon generates an electrical signal of finite duration at the output of the detector, the electrical signals start to overlap and to pile-up, i.e. the electrical voltages of the electrical signals add up to an electrical signal that is the superposition of multiple single-photon responses. Depending on the temporal proximity of e.g. two single-photon responses this can result in a pulse height of approximately twice that of a single-photon response or less.

The situation, when generated electrical signal pulses start to overlap such that the voltage of the detection signal increases above a single-photon detection event, is referred to as "pulse pile-up" in TCSPC applications. This pulse pile-up effect in turn can be problematic for the interpretation of the measurement data, as the detection electronics of a conventional TCSPC set up do not discriminate between electrical pulses exhibiting different amplitudes, i.e. conventional TCSPC electronics are unable to distinguish these events from single-photon events.

In order to avoid pulse pile-up and dead-time effects, TCSPC measurements are typically performed at count rates that are well below the excitation rate (~ 1% of the excitation rate).

However, a low count rate translates to a longer measurement time, which in many applications is undesirable. This holds particularly true for fast fluorescence lifetime imaging (FLIM) measurements on scanning microscopes or fast (on-line) monitoring of fluorescence lifetimes in spectroscopy and applications that require particularly short measurement times.

The pulse pile-up leads to a disproportional decrease of registered "early" photons of the measurement system, as these photons (due to the exponential lifetime characteristic of excited states) have a higher probability of occurrence. The term "early" refers to a closer temporal spacing to the preceding excitation pulse with respect to "late" photons that have a bigger temporal spacing to the excitation pulse. The higher probability of occurrence, in turn, leads to a higher probability of piled-up electric pulses right after the excitation pulse. As these pulses are counted only as one photon (instead of two or more), "early" photons tend to be lost by the TCSPC electronics more often. Particularly when analyzing the resulting decay time of the decay histogram, this leads to artefacts that particularly shift the estimated lifetime towards longer lifetimes.

On the other hand, photon-number-resolving detectors that can provide detection signals whose amplitude account for coinciding detection of photons are of no use in conventional TCSPC setups, as conventional TCSPC electronics are not configured to distinguish detection signal amplitudes quantitatively.

Soukka J M et al. "Optimization of multi-photon event discrimination levels using Poisson statistics", optics Express, OSA Publishing, US Vol. 12, No. 1, 12. November 2004, pages 84 to 89, teaches a photon-number-resolving system for some detection events following a laser pulse at a kilo-Hertz (10³ Hz) time scale. For time-correlated fluorescence applications such laser pulse frequencies are orders of magnitude to small in order to arrive at reasonable measurement times. The underlying electronics are configured for the wrong time regime and therefore are of no use in pico-second electronics.

For most TCSPC applications, however, it would be advantageous to capture the true number of detected photons and to avoid pile-up induced artifacts.

An object of the present invention is to provide a system and a method to overcome the problems of pulse pile-up and coinciding photon detection in TCSPC applications. The object is achieved by the system for time-correlated photon-resolved counting applications having the features of claim 1.

Advantageous embodiments are described in the dependent claims.

According to claim 1 the system comprises the following components:
- A photon-number-resolving detector connected to
- A plurality of comparators, wherein each comparator is adjusted to a different reference value, wherein each comparator is configured to output a particularly digital comparator-signal in the event that the modulus of a received detection signal from the photon-number-resolving detector exceeds the modulus of the reference value of the respective comparator;
- A conversion electronics configured to receive the comparator-signals from the plurality of comparators and to generate a digital detection event for each detection signal of the photon-number-resolving detector, wherein each detection event comprises a time code for the detection event comprising a time information of the detection signal and an associated photon-number code obtained from the number of coinciding comparator-signals;
- A recording electronics, wherein the recording electronics is configured to record the time code of the detection event and the associated photon-number code together,
wherein the reference values of the comparators are adjusted such that each comparator is sensitive to a predefined detection signal amplitude or its exceedance, wherein the predefined detection signal amplitude corresponds to a predefined number of coinciding photons, such that a photon number for each detection signal can be resolved by the system.

Each comparator is particularly adjusted such that it is sensitive to a different number of coinciding photons.

The system according to the invention solves the problem by combining a photon-number-resolving detector with a TCSPC-electronics that is configured to resolve and discriminate between detection signals having different amplitudes, wherein the amplitude of the detection signal encodes for the detected photon number.

This way, also detector pulse-pile-up is solved, as the piled-up pulses can be assigned to corresponding photon numbers.

With the capability of resolving signals from a photon-number resolving detector, time-correlated photon-counting applications such as fast FLIM measurements on scanning microscopes or fast (on-line) monitoring of fluorescence lifetimes in spectroscopy and applications that require particularly short measurement times can be performed approximately 10 to 100 times faster than with conventional single-photon-counting systems.

Ideally, the amplitude of the detection signal scales linearly with the coinciding photon number. However, in practice this linearity is not perfect. The non-linearity can be accounted for when evaluating the detection signals in a manner that is known to the person skilled in the art.

The photon-number-resolving detector is particularly a point detector that is configured to output an electric pulse that encodes for the detected photon number. A point detector is particularly not capable to spatially resolve the detected photons.

A photon-number-resolving detector is particularly also an array of point detectors that is configured to output electric pulses that encode for the detected photon number for each detector.

The photon-number detector is particularly generating and providing the electrical pulses upon detection of one or more photons - in contrast to CCD-cameras, or CMOS-based cameras that are read-out at fixed frame-rates.

Such photon-number-resolving detectors can be for example suitably configured superconducting nanowire photon detectors (SNSPD), silicon PMTs or hybrid photo detectors (HPD).

The photon-number-resolving detector is particularly connected with an electric cable more particularly with a coaxial cable to the plurality of comparators.

The term "connected to" refers to a direct or indirect connection between the photon-number-resolving detector and the comparators. The connection is particularly established with electrical wires. Other components, such as an amplifier or a signal splitter, being electrically connected to the photon-number-resolving detector and the comparators and that are arranged between the photon-number-resolving detector and the comparators, are explicitly comprised by the term "connected to", i.e. the photon-number-resolving detector is still considered as being connected to the comparators.

The system particularly comprises a signal splitter and/or an amplifier.

The signal-splitter and/or an amplifier are particularly arranged between the photon-number-resolving detector and the plurality of comparators.

The signal splitter is configured and designed to split an incident detection signal from the photon-number-resolving detector so that the detection signal can be provided to each comparator of the plurality of comparators simultaneously.

Particularly before splitting the detection signal with the signal splitter, i.e. between the photon-number-resolving detector and the signal splitter, the amplifier that amplifies the detection signal can be arranged. The amplification is particularly adjustable.

Alternatively, a plurality of amplifiers can be arranged after the signal splitter.

The signal splitter is particularly arranged in the same housing as the conversion electronics and the comparators.

The comparators are particularly electric comparators. Each comparator is configured to compare a magnitude of a signal from the photon-number-resolving detector and an electric reference value, such as an electric voltage or an electric current.

Each comparator particularly compares the electric voltage of the detection signal from the photon-number-resolving detector to the associated reference value that is an electric voltage itself.

The reference value can be adjusted to different values. This can be done for example with a suitable software interface or a suitable hardware means.

The flexibility in adjusting the comparator levels, i.e. the reference values, individually allows for taking into account a non-linearity of detectors signals associated to different coinciding photon numbers. This non-linearity can have its origin for example in saturation effects in detection pulse generation of the detector.

The output of each comparator is particularly a digital signal in form of a voltage signal. This digital output signal is referred to as the comparator-signal. The comparator-signal assumes particularly the value 1 in case the detection signal is greater than the reference value, particularly in case the modulus of the detection signal is greater than the modulus of the reference signal.

In all other cases the comparator output assumes the value zero, which can be represented by a 0 V output voltage, i.e. no comparator-signal is generated by the comparator.

A comparator-signal can therefore be understood as the comparator output of a nonzero voltage.

As the temporal resolution in time-correlated photon counting applications is usually below nanoseconds, the comparators should have an appropriate response in terms of time jitter and speed.

The number of comparators in the system according to the invention should be at least two or more. With two comparators, two different photon number events can be resolved, for example the detection of one or more coinciding photons. But it is also possible to discriminate between two and more than two coinciding photons.

An embodiment comprising three comparators is capable of discriminating for example between photon detection events comprising one, two or more coinciding photons.

Generally speaking, with N comparators the system can discriminate between N different photon detection events comprising different photon numbers, wherein N is a natural number.

In typical time-resolved fluorescence measurements the likelihood of higher order coincidences (a plurality of coinciding photons) decreases exponentially after an excitation event. At the same time the dynamic range of the detector is limited. Depending on accuracy requirements and typical detector capabilities the number of comparators can therefore typically be limited to single digit numbers.

The system according to the invention can have for example 2, 3 or 4, particularly 6 to 8 comparators, each comparator being adjusted to a different reference value. In case of a multichannel system, for example a system configured to also discriminate between the polarization of the incident photons and/or the wavelength of the photons, the number of comparators increases accordingly, as the number of photon-number-resolving detectors increases. Each detector then requires its own plurality of comparators in order to resolve photon numbers.

The comparators are adjusted to different reference values, wherein the reference values are such that each comparator is sensitive to a different number of coinciding photons, i.e. a first comparator of the plurality of comparators is adjusted to generate a comparator-signal if one or more photons are detected, a second comparator is adjusted such that it generates a comparator-signal in case two or more coinciding photons are detected, and so on.

Thus, in case two coinciding photons are detected from the detector, the first and second comparator will be triggered and each comparator will output a comparator-signal, wherein if only one coinciding photon is detected, only the first comparator will be triggered by the detection signal (due to its lower amplitude) and only the first comparator will output a comparator-signal.

Similarly, this applies to more than two comparators. If the system comprises three comparators, the third comparator will be adjusted (by means of its associated reference value) to generate a comparator-signal, only when three or more coinciding photons have been detected, i.e. if the amplitude of the detection signal has an appropriate value.

The conversion electronics are connected to the comparators. The conversion electronics and comparators can be housed in the same housing. The conversion electronics are particularly a digital electronic structure configured to process and generate digital data.

The conversion electronics assigns the comparator-signals to a digital detection event. The conversion electronics therefore determines whether comparator-signals are assigned to the same detection event or whether comparator-signals are assigned to different detection events at the detector.

Whether comparator-signals are assigned to the same or a different detection event depends particularly on the pulse-pair resolution of the system, particularly on the pulse-pair resolution of the photon-number-resolving detector.

For a given pulse-pair resolution of the photon-number-resolving detector, photons having a temporal spacing that is below the pulse-pair resolution of the photon-number-resolving detector are considered as being detected simultaneously, i.e. the photons are coinciding.

The goal of the system is to determine the number of coinciding photons at the detector. Therefore, the system is configured to determine the number of coinciding comparator-signals.

The term "coinciding" refers to the pulse-pair resolution of the detector as well as the pulse-pair resolution of the comparators and other electronic components that limit the pulse-pair resolution of the system.

The term "coinciding" or "coincidence" can be understood as a temporal spacing that is within a predefined time interval, such as for example a pulse-pair resolution of the system or the detector and the conversion electronics.

Thus, once a detection event has been established by the conversion electronics, the time code for the detection event comprising a time information of the detection signal associated to the detection event is generated by the conversion electronics. The time information can be a digital number coding for a unique time.

Furthermore, the conversion electronics determines the number of detected photons within the detection event and generates an associated photon-number code obtained from the number of coinciding comparator-signals. The coinciding comparator-signals are particularly outputs of the comparator that correspond to a nonzero voltage output, i.e. the detection signal exceeds the associated reference value.

The conversion electronics is particularly configured to only generate a time code in case an event, for example a detection event, has been registered. Events can for example also refer to synchronization signals from an external device, such as a laser, a light source, a scanner, a start- or stop-signal event of a measurement.

The recording electronics is configured to record the time code of the detection event and the associated photon-number code and particularly other time codes associated to other events, as disclosed for example in the previous paragraph.

The recording electronics can be housed in the same housing as the comparators and the conversion electronics.

Alternatively, the recording electronics can be integrated in an external computer as well.

The recording electronics can comprise a FiFo-memory to buffer the event data.

As information is stored in a time-tagged manner of events, the data volume can be reduced as compared to recording continuous time information independently of whether a detection event or another event has been registered by the system.

As the system is particularly configured to record fluorescence lifetimes of fluorescent samples, the temporal resolution and processing speeds of the components have to be adapted to the time scales encountered in such measurements, i.e. the system particularly has a time resolution in the order of several picoseconds, e.g. 50 picoseconds but particularly better than 0.5 nanoseconds. When the temporal resolution of the system or its components is worse than 0.5 nanoseconds, the system is particularly not configured for fluorescence lifetime measurements but for slower processes.

The system according to the invention particularly does not require an external clocking mechanism for detection signal detection, as the system registers and records the detection events asynchronously as the detection signals arrive at the comparators.

The system and its components can be at least partially incorporated by a computer program executed on a computer. Particularly components arranged down-stream of the comparators, i.e. after signals and events are in a digital format, can be incorporated partially or completely in a computer program.

The system and its components can also be incorporated in hardware.

According to another embodiment of the invention, the system comprises an optical microscope, for analyzing a luminescent sample, wherein the microscope particularly comprises an optical filter for filtering excitation light of an excitation light source, from the luminescent photons of the sample, wherein the optical microscope provides the filtered luminescent photons to the photon-number-resolving detector.

According to another embodiment, the system is configured for Fluorescent-Lifetime-IMaging (FLIM).

According to another embodiment, the optical microscope is a confocal microscope comprising a scanning system for spatially scanning a luminescent sample, wherein the scanner is configured to provide scanner marker codes, e.g. line start-/line stop codes, or frame codes to the recording electronics.

According to another embodiment of the invention, the system comprises an optical spectrometer.

According to an embodiment of the invention, the recording electronics is configured to record a digital file structure, wherein the file structure comprises the time codes of the detection events and the associated photon-number codes.

This embodiment allows for a reduction in data volume, as the file structure does not comprise time-codes without an associated event and only one time code is required for multi-photon events.

A file structure is a digital data structure that can be stored on a non-transitory medium, such as a hard drive or other digital storage media.

As the data volume is reduced also real-time monitoring of the measurement can be performed. Thus allowing for the fast analysis of FLIM data recorded at high count rates, i.e. at higher count rates than in conventional single-photon counting applications.

According to another embodiment of the invention, the recording electronics is configured to further process the time codes and the associated detection events and particularly to display a graphical representation of the processed time codes and associated detection events, particularly in real-time. For this purpose the recording electronics can be connected to a screen.

The term "real-time" particularly refers to a quasi-simultaneous processing of the acquired data, such that a feedback or a result of the processed data can be given to a user multiple times per minute while a measurement is running. The results of the processing can be displayed on a screen.

According to another embodiment of the invention, the conversion electronics comprises a plurality of time-to-digital converters (TDC), each TDC being connected to the output of one of the comparators, and configured to provide a digital TDC-event time code for each comparator-signal of the respective comparator.

Each TDC is configured to assign a digital number, namely the TDC-event time code, to an incident signal. For this purpose each TDC is connected to a particularly common TDC clock that provides a references frame for the time to particularly all TDCs.

This embodiment, where each comparator is connected to a separate TDC, can be realized with few modifications to TCSPC-electronics that are designed for single-photon detection. Conventionally, TCSPC-electronics are not adjusted for different reference values such that photon-number-resolvable comparator-signals can be generated.

In contrast to conventional TCSPC electronics, also the recording electronics needs to be configured differently in order to generate an appropriate file structure that can reflect photon-number-resolved detection events.

According to the invention, the plurality of comparators is particularly adjusted with different reference values for the comparators such that photon-number-resolvable comparator-signals are generated by the comparators.

Each TDC generates a plurality of TDC-event time codes. Which of a plurality of generated TDC-event time codes are assigned to the same detection event can be decided by means of a coincidence detector that is described in the following embodiment.

According to another embodiment of the invention, the conversion electronics further comprises a coincidence detector and a photon-number encoder connected to the output of the plurality of TDCs, wherein the coincidence detector is configured to generate the time code of the detection event and the photon-number encoder generates the associated photon-number code of the detection event, wherein the coincidence detector generates the time-code of the detection event from coinciding TDC-events of the plurality of TDCs.

A system according to this embodiment can be used for time-correlated photon-number-resolved counting applications without many modifications to existing time-correlated single-photon counting applications.

According to an alternative embodiment of the invention, the system comprises only one common TDC particularly for each detector channel, wherein the plurality of comparators is connected with their outputs to a latch, wherein the photon-number-resolving detector is not only connected to the comparators but simultaneously connected to a trigger electronics configured to identify a detection signal from the photon-number-resolving detector and to generate a trigger pulse upon identification of a detection signal, wherein the trigger electronics is connected to the common TDC and the latch electronics, wherein the trigger electronics is configured to provide the trigger pulses to the common TDC and the latch, wherein for each trigger pulse from the trigger electronics, the common TDC generates the digital time code of the detection event and provides the time code of the detection event to the recording electronics and wherein for each trigger pulse the latch, particularly simultaneous to the generation of the time code of the detection event, registers the comparator-signals of the plurality of comparators connected to the latch and provides the comparator-signals to a photon-number encoder, wherein the photon-number encoder is configured to generate the photon-number code of the detection event.

This embodiment allows for a system with fewer TDCs which in turn is economically favourable.

Every time the trigger electronics triggers the latch, the latch essentially records a snapshot of the comparator states, i.e. which comparator is at which comparator level, e.g. 0 or 1. This snapshot is then provided to a logic that determines the number of comparator-outputs that are nonzero, i.e. the number of comparator-signals. This logic is termed the photon-number encoder. While this logic generates the photon-number code of the detection event, the TDC generates the associated time-code of the detection event. The time-code of the detection event and the photon-number code are processed by the recording electronics accordingly.

The trigger electronics can be a vertex trigger.

The latch can be an electronic register or a plurality of D-Flip-Flops.

According to another embodiment of the invention, the system comprises an excitation light source, arranged and configured to excite a luminescent or fluorescent sample with excitation light.

The system can for example comprise a spectrometer for time-resolved fluorescence spectroscopy or a microscope for time-resolved fluorescence measurements. The microscope can comprise one or more excitation sources as well as a scanning system for scanning a laser beam across a sample.

According to another embodiment of the invention, the system further comprises a luminescence detection system, comprising an optical filter arranged and configured to filter the excitation light from luminescent light of the luminescent sample, the detection system further comprising the photon-number-resolving detector arranged such that the photon-number-resolving detector can detect the luminescent light from the sample.

The optical filter can for example comprise a dichroic mirror and/or an emission filter for blocking the excitation light and transmitting the luminescence to the detection system.

The filter can for example comprise a monochromator.

The detection system can be comprised in a spectrometer or in a microscope.

Luminescence can be for example fluorescence, phosphorescence or another light-induced, particularly spontaneous, emission process of the sample.

According to another embodiment of the invention, the excitation light source is a pulsed excitation light source, such as a pulsed laser, wherein the system and particularly the light source, is configured to generate a synchronization pulse configured to indicate that a light pulse of the excitation source has been generated and to provide the synchronization pulse to the system, particularly to the conversion electronics, wherein the time code for a detection event following or preceding the synchronization pulse comprises an information about the time interval between the synchronization pulse and the detection event, wherein the time code particularly also comprises an information about an elapsed measurement time.

As the pulsed light source is particularly pulsed in a constant frequency or in a fixed pattern, the elapsed measurement time can be estimated by counting the number of received synchronization pulses, since the measurement started.

Such a system can record time-correlated photon-number-resolved data particularly efficient as the data rates are kept to a minimum.

The synchronization pulse can be generated by the light source itself or externally with a device that is configured to register and convert light pulses to electric pulses. The repetition rates of light sources for time-resolved photon-number resolved counting applications can be in the MHz region between 1 MHz and 150 MHz. However, also lower repetition rates and specific repetition patterns of the light source can be used.

The synchronization of the detected photons and the excitation light source is particularly important, when performing time-correlated measurements, where the detection of one or more photons relative to a preceding excitation pulse is of interest.

This is for example the case, when a decay histogram of the luminescence of a sample should be generated.

A decay histogram shows the detection frequency or detection probability with respect to the elapsed time after excitation with the excitation pulse.

According to another embodiment of the invention, the system comprises a non-transitory computer-readably medium with a file structure stored on the medium, wherein the file structure comprises
- a file header portion, the header portion comprising file-related information;
- event-based time codes only, such that to each time code an associated event code is stored, wherein one of the stored associated event codes is a photon-number code comprising information on the number of detected photons of a detection event.

The same file structure is particularly detailed in the following embodiments.

According to another embodiment of the invention, the digital file structure for storing time-correlated photon-number-resolved counting applications is particularly stored on a non-transitory computer-readable medium, wherein the digital file structure is particularly recorded with the system according to the invention, and comprises
- the file header portion;
- event-based time codes only, such that to each time code an associated event code is stored, wherein one of the stored associated event codes is a photon-number code comprising information on the number of detected photons of a detection event.

The terms and definitions for features and components of the digital file structure apply identically to the terms and definitions for the features and components of the system and vice versa.

The file structure according to the invention allows for a highly economic transmission and storage of time-correlated and photon-number-resolved data particularly recorded with a system according to the invention.

An event-based time code refers to the fact that only in case an event has been registered a file entry is generated and stored in the file structure.

It is noted that a time code per se is not an event. An event is a time code of the event in combination with an associated event code. The event code can be for example a marker code or an external marker code, indicating an event from an external device.

An event code can furthermore be a detection channel code, comprising information about a detector number, when more than one detector is used for a measurement.

Also, when the system comprises a scanner, the scanner can provide a scanner marker code, e.g. line start-/line stop code, a frame code, as an event code. All event codes are provided and stored with a time code in the file structure.

The file structure does particularly not comprise a continuous or equal-spaced time information that is recorded independently of events, nor is the file structure recorded with a specific constant recording frequency such that each entry reflects a predefined time.

The file structure comprises tuples of time codes and associated event codes.

The digital file structure provides the possibility to reconstruct each recorded event while preserving memory.

The digital file structure is particularly configured for storing temporal events (associated with the corresponding time codes) in a successively manner.

Furthermore, the digital file structure allows for high-count rate time-correlated photon-number-resolved measurements, which is not possible with conventional TCSPC file structures, as no time-correlated photon-number-resolved information is stored. A discrimination between single-photon events and more photon events is not possible with conventional TCSPC file structures, as the file structure in the state of the art is not configured to store a photon number associated to a time code.

According to another embodiment of the invention, the time code for an event, particularly for a detection event, comprises an information about the time interval between a preceding or a subsequent synchronization pulse and the event, wherein the time code particularly also comprises an information about an elapsed measurement time.

This file structure allows for time-correlated photon-number-resolved measurements and histograming of the recorded events.

The file structure allows for bandwidth and memory saving of application data of a time-correlated measurement, as only event-based data are recorded.

According to this embodiment, the time code comprises two different timing information, a high-resolution timing information that comprises the time interval to a synchronization pulse, e.g. of a pulse light source, wherein the temporal resolution of this information is particularly between 1 and 250 or even 500 picoseconds and a low-resolution timing information that comprises the time elapsed since a measurement started that is recorded in the file structure. This low-resolution time information comprises for example the number of preceding synchronization pulses. Together with the information about the repetition frequency of the light source that is for example stored in the file header, the event can be associated to the "correct" preceding or subsequent synchronization pulse. The low resolution time information has a temporal resolution of particularly 10 to 100 nanoseconds, particularly depending on the repetition rate of the pulsed light source.

The time code for the system, the method and the file structure can be organized as detailed in the previous paragraph.

The data format for the time code comprising two time information at different resolution preserves data volume.

The problem according to the invention is furthermore solved by a method for recording photon-number-resolved detection events detected by a photon-number-resolving detector with a system according to the invention. The method comprises the steps of:
- Particularly exciting a luminescent, particularly fluorescent sample with an excitation light source;
- Particularly filtering the excited luminescent photons from the excitation light with an optical filter;
- Particularly detecting the filtered luminescent photons with the photon-number-resolving detector;
- Providing a detection signal from the photon-number-resolving detector, particularly caused by the luminescent photons;
- Particularly amplifying and/or splitting the detection signal;
- Providing the particularly amplified and split detection signal to the plurality of comparators, wherein each comparator is particularly adjusted to a different, associated reference value;
- Generating a digital detection-event for each detection signal of the photon-number-resolving detector, wherein each digital detection-event comprises a time code for the detection signal and a photon-number code decoded from the coinciding comparator-signals;
- Recording the time code and the photon-number code for each detection event, particularly on a non-transitory, computer-readable medium, more particularly in a digital file structure according to the invention;
- Particularly processing the time codes and photon-number codes using the photon-number codes, particularly generating and displaying histograms or temporal correlation curves of the detection events;
- Particularly displaying the processed time codes and photon-number codes;
- Particularly storing the processed time codes and photon-numbers on a non-transitory computer-readable medium;

The method according to the invention, allows for the recording and evaluation of photon-number-resolved measurements in a time-correlated manner.

The method allows for higher count rates than in conventional TCSPC applications, as photon-number-resolved information is stored in a time-correlated format, namely with a time code and a photon-number code.

The method allows pile-up free recording and photon-number-resolved counting at comparably high count rates.

According to another embodiment of the invention, a synchronization pulse from a pulsed light source is provided, wherein the time code for a detection event following or preceding the synchronization pulse comprises an information about the time interval between the preceding /or the following synchronization pulse and the detection event, wherein the time code particularly also comprises an information about an elapsed measurement time.

This embodiment allows for a time-correlated pile-up-insensitive, photon-number resolved recording.

With the possibility of recording photon-number-resolved measurements in a time-correlated manner, the following embodiment furthermore allows for histograming the recorded data.

According to another embodiment of the invention, a frequency distribution, such as a histogram of a photon number with respect to the respective preceding synchronization pulse is generated, wherein from the photon-number code of a recorded detection event the number of photons of the detection event is estimated and added to the frequency distribution at the respective time with respect to the preceding pulse.

The generated frequency distribution can take advantage of the photon-number-resolved event codes, and thus a comparably faster acquisition of such frequency distributions and decay histograms can be achieved using higher count rates during the measurement. The method allows the generation of pile-up insensitive histograms of time-correlated photon-number-resolved counting applications.

The problem according to the invention is furthermore solved by a method for adjusting the reference values of the plurality of comparators for time-correlated photon-resolved counting measurements for a system according to the invention. The method according to the invention can for example be performed during or prior to execution of the method for recording photon-number-resolved detection events detected by a photon-number-resolving detector as described above.

According to the invention the system has a plurality of N comparators, N being a natural number greater one, the method comprising the steps of:
- Providing a photon stream to the photon-number-resolving detector;
- Determining a count rate of incident photons on the photon-number-resolving detector with the system;
- Estimating from the count rate a temporal inter-photon distribution;
- Estimating from the inter-photon distribution N probabilities to detect M photons in a predefined time interval, wherein each probability of the N probabilities is estimated for a different value of M, M being a natural number, for example between 1 to N;
- For each probability and its associated photon number M, adjusting the reference value of one of the N comparators such that the ratio between the generated number of comparator-signals from the comparator and the determined count rate equals the respective probability.

This method allows for an automatic adjustment of the reference values of the comparators, without prior knowledge on the photon-number-resolving detector characteristics.

The only value that has to be known approximately is the count rate or the photon flux. From the count rate and the known Poisson statistics of photon detection distributions, the inter-photon interval distribution can be estimated. From this distribution the probability to detect a specific number of photons within a predefined time interval can be derived.

It is noted that in practise, the ratio between the generated number of comparator signals and the determined count rate equals the respective probability within a tolerance. Said tolerance particularly comprises ratios that are within 20%, more particularly 10% more particularly 5% of the respective probability.

The probability of occurrence of coinciding photons can be determined from parameters from the count rate. Measured relative to the last photon that has been detected by the detector, the fraction of photons that arrive within a shorter time span than a predefined interval dt (e.g. the temporal resolution of the detector) from each other is given by
1 - exp(-n·dt) wherein n is the count rate of the incident photons. As each photon that arrives within this time span is basically registered as coinciding, the probability of M coinciding photons can be estimated.

One of the comparators is then solely to be adjusted such that the fraction of comparator-signals registered at the comparator and the count rate equals the probability of detecting M coinciding photons.

While in an unadjusted state of the system the detected count rate might not reflect the true photon flux initially, because piled-up photons are not photon-number resolved at first (as the reference values are not adjusted) and piled-up photons are therefore "invisible" to the counting electronics, the method iteratively approximates the detected count-rate to the true photon flux when executed. In a first iteration, the reference values are adjusted such that the photon-distribution should be obtained that corresponds to the detected count rate. Once the reference values are adjusted, the counting electronics can resolve the previously "invisible" piled-up photons, the detected count-rate might increase, as the detection events are categorized to the correct photon-numbers.

The increase in count rate reflects the true photon flux. If necessary the method can be executed again in order to account for the increased count rate.

### Figure Description

In the following, the invention is explained in detail with reference to exemplary embodiments shown in the figures. It is being noted that the drawings are not to scale. It is shown in
- Fig. 1:: a schematic circuit diagram of the system according to the invention comprising a plurality of TDCs; and
- Fig. 2:: a schematic circuit diagram of the system according to the invention comprising only one TDC.

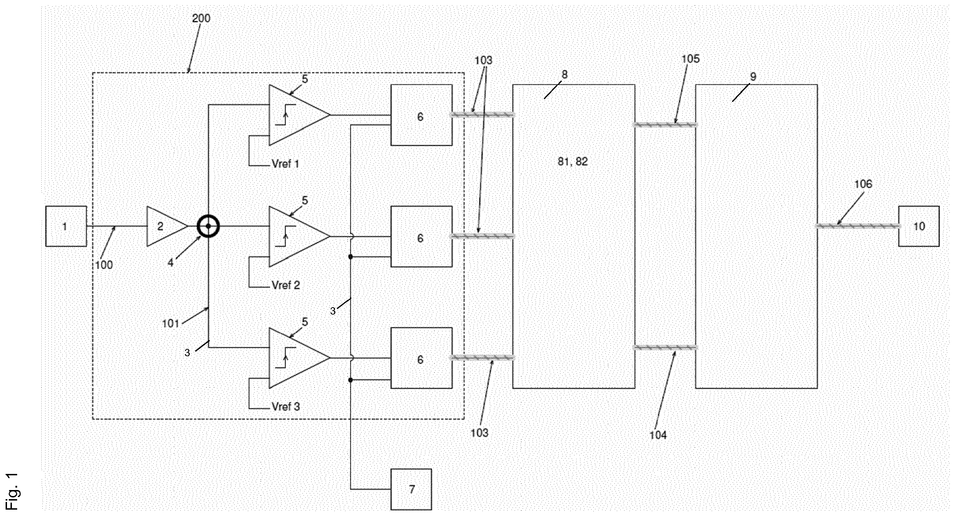

In Fig. 1 a circuit diagram is shown for a first alternative of the system according to the invention. The system comprises a photon-number-resolving detector 1 that is electrically connected with its output to a signal amplifier 2 that is configured to amplify the detection signals 100 from the photon-number-resolving detector 1. The solid lines connecting components represent electrical connections 3 between components of the system. The amplifier 2 is connected to a signal splitter 4 that splits the amplified signal in three equal detection signals 101 in this example.

The split signals 101 are provided to three electrical comparators 5. Each comparator 5 is adjusted to a different reference value V_{ref1}, V_{ref2}, V_{ref3} (collectively referred to as V_{ref}). The reference value V_{ref} is a reference voltage that is adjustable.

Each comparator 5 has an output that is configured to provide a digital comparator-signal 102 in case the amplitude of the received detection signal 100, 101 exceeds the reference value V_{ref} the respective comparator 5 is adjusted to.

The comparators 5 are each connected to a separate time-to-digital converter (TDC) 6. The TDC 6 is configured to convert a received comparator-signal 102 to a digital number - the TDC-event time code 103 - that comprises information on the time, when the comparator-signal 102 was generated. In order to have a common time reference, the TDCs 6 are connected to a common TDC clock 7 that provides the common time reference system. This way, the TDC-event time codes 103 of different TDCs 6 can be compared and sorted.

The TDC-event time codes 103 are then provided to the conversion electronics 8. The conversion electronics 8 comprises a coincidence detector 81 and a photon-number encoder 82. The coincidence detector 81 decides, whether different TDC-event time codes 103 are considered coinciding or not. This is done for example by comparing the temporal spacing of TDC-event time codes 103 to a minimum pulse-pair resolution value of the system. When the spacing between TDC-event time codes 103 is larger than the minimum pulse-pair resolution value, the comparator-signals 102 are not considered being coinciding.

In case the TDC-event time codes 103 are spaced closer than the minimum pulse-pair resolution value, the comparator-signals 102 and thus the TDC-event time codes 103 are considered being coinciding.

Once coinciding TDC-event time codes 103 have been identified by the coincidence detector 81 the time code 104 for the detection signal 100 is generated. Furthermore, the photon-number code 105 is generated by the photon-number encoder 82. The generated time code 104 for the detection signal 100 and the associated photon-number code 105 are provided to the recording electronics 9. The recording electronics 9 can store the events in a digital file structure 106 or generate a frequency distribution of the photon-number events or correlate the detection events photon-number-resolved particularly in real-time.

The digital file structure 106 comprises the time code 104 of the detection event and the photon-number code 105 pairwise, i.e. together, in a single entry. The digital file structure 106 can be stored on a non-transitory computer-readable medium, such as a hard drive 10. The system can comprise a computer 10 to which the recording electronics 9 is connected. The file structure 106 is stored on the computer 10.

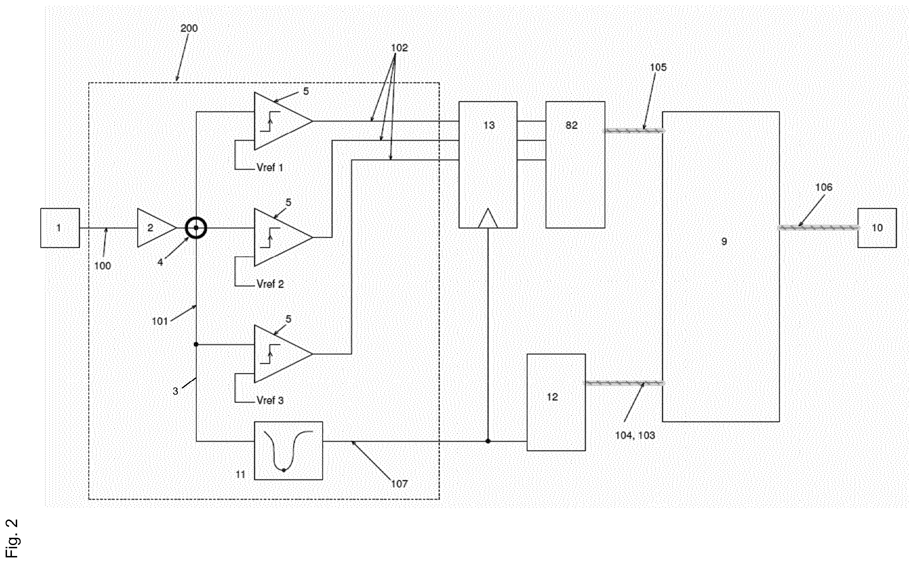

In Fig. 2 an alternative embodiment is schematically shown. The embodiment shows the photon-number resolving detector 1 as well as the amplifier 2 and the splitter 4. The reference numerals are identical for identical components from Fig. 1.

In contrast to the embodiment in Fig. 1, the amplified and split detection signal 101 is also provided to a trigger 11 (also referred to as trigger electronics in this specification) that is configured to trigger a single, common TDC 12 and a latch 13 with a trigger pulse 107.

The trigger 11 is configured to discriminate between background noise and true detection signals 100, 101. The trigger 11 generates a trigger pulse 107 for each detection signal 100, 101.

The common TDC 12, when triggered by the trigger 11, generates a TDC-event time code 103 that is the time code 104 for the detection event. The time code 104 is then provided to the recording electronics 9 that processes the provided time codes 104 as described in Fig. 1.

The comparators 5 instead of being connected to a TDC each are all connected to a latch 13. The latch 13 is configured to record the comparator 5 states, when the latch 13 is triggered by trigger pulse 107 from the trigger 11. For this reason, the latch 13 is connected to the trigger 11. Once the latch 13 is triggered it records all comparator states, i.e. it records the comparator-signals 102, whether they are zero (non-event) or one (event). The latch 13 provides this "snapshot" of comparator states to a photon-number encoder 82 that is configured to generate a photon-number code 105 from the provided comparator-signals 102. The photon-number code 105 comprises information on the number of non-zero comparator-signals at the time the latch 13 was triggered by the trigger 11.

The photon-number encoder 82 provides the photon-number code 105 to the recording electronics 9 that processes the photon-number code 105 as described above.

This embodiment does not need a coincidence detector.

For each photon-number resolving detector 1 of the system, the boxed region 200 in both Figures 1 and 2 need to be provided to each detector 1. The other components of the system can be shared for all detectors 1.

### Reference sign list

- 1: detector
- 2: amplifier
- 3: electrical connection
- 4: splitter
- 5: comparator
- 6: time-to-digital converter
- 7: time-to-digital clock
- 8: conversion electronics
- 81: coincidence detector
- 82: photon-number encoder
- 9: recording electronics
- 10: computer, data storage
- 11: trigger electronics
- 12: time-to-digital converter
- 13: latch
- 100: detection signal
- 101: split detection signal
- 102: comparator signal
- 103: TDC-event time code
- 104: time code of event
- 105: event code / photon-number code
- 106: digital file structure
- 107: trigger pulse
- 200: boxed region
- V_{ref}: reference value

## Claims

1. System for time-correlated photon-number-resolved counting applications, the system comprising the following components:
- A photon-number-resolving detector (1) connected to
- A plurality of comparators (5), wherein each comparator (5) is adjusted to a different reference value (V_{ref}), wherein each comparator (5) is configured to output a comparator-signal (102) in the event that the modulus of a received detection signal (100, 101) from the photon-number-resolving detector (1) exceeds the modulus of the reference value (V_{ref}) of the comparator (5);
- A conversion electronics (8) configured to receive the comparator-signals (102) from the plurality of comparators (5) and to generate a digital detection event for each detection signal (100) of the photon-number-resolving detector (1), wherein each detection event comprises a time code (104) for the detection event comprising a time information of the detection signal (100) and an associated photon-number code (105) obtained from the number of coinciding comparator-signals (5);
- A recording electronics (9), wherein the recording electronics (9) is configured to record the time code (104) of the detection event and the associated photon-number code (105),
wherein the reference values (V_{ref}) of the comparators (5) are adjusted such that a photon number for each detection signal (100) can be resolved by the system.

2. System according to claim 1, wherein the recording electronics (9) is configured to record a digital file structure, wherein the file structure comprises the time codes (104) of the detection events and the associated photon-number codes (105) and/or wherein the recording electronics (9) is configured to further process the time codes and the associated detection events and particularly to display a graphical representation of the processed time codes and associated detection events, particularly in real-time.

3. System according to claim 1 or 2, wherein the conversion electronics (8) comprises a plurality of time-to-digital converters (TDCs)(6), each TDC (6) being connected to one of the comparators (5), and configured to provide a digital TDC-event time code (103) for each comparator-signal (102) of the respective comparator (5).

4. System according to claim 3, wherein the conversion electronics (8) further comprises a coincidence detector (81) and a photon-number encoder (82) connected to the plurality of TDCs (6), wherein the coincidence detector (81) is configured to generate the time code (104) of the detection event and the photon-number encoder (82) generates the photon-number code (105) of the detection event, wherein the coincidence detector (81) generates the time code (104) of the detection event from coinciding TDC-event time codes (103) of the plurality of TDCs (6).

5. System according to claim 1 or 2, wherein the plurality of comparators (5) are connected to a latch (13), wherein the photon-number-resolving detector (1) is also connected to a trigger electronics (11) configured to identify a detection signal from the photon-number-resolving detector (1), wherein the trigger electronics (11) is connected to a common time-to-digital converter (TDC) (12) and the latch (13), wherein the trigger electronics (11) is configured to provide trigger pulses (107) to the common TDC (12) and the latch (13), wherein for each trigger pulse (107) the common TDC (12) generates the digital time code (104) of the detection event and provides the time code (104) of the detection event to the recording electronics (9) and wherein for each trigger pulse (107), the latch (13), particularly simultaneous to the generation of the time code (104) of the detection event, registers the comparator-signals (102) of the plurality of comparators (5) connected to the latch (13) and provides the comparator-signals (102) to a photon-number encoder (82), wherein the photon-number encoder (28) is configured to generate the photon-number code (105) of the detection event.

6. System according to one of the preceding claims, wherein the system comprises an excitation light source arranged and configured to excite a luminescent or fluorescent sample with excitation light.

7. System according to claim 6, wherein the system further comprises a luminescence detection system, comprising an optical filter arranged and configured to filter the excitation light from luminescent light of the luminescent sample, the detection system further comprising the photon-number-resolving detector (1) arranged such that the photon-number-resolving detector (1) can detect the filtered, luminescent light from the sample.

8. System according to claim 6 or 7, wherein the excitation light source is a pulsed excitation light source, wherein the system and particularly the light source, is configured to generate a synchronization pulse configured to indicate that a light pulse of the excitation source has been generated and to provide the synchronization pulse to the conversion electronics (8) for generating the time code (104) for a detection event following or preceding the synchronization pulse.

9. System according to one of the preceding claims, wherein the system is configured to store time-correlated photon-number-resolved counting data in a digital file structure, the file-structure being stored on a non-transitory computer-readable medium (10), wherein the file structure comprises
- a file header portion;
- event-based time codes (104) only, such that to each time code (104) at least one associated event code (105) is stored, wherein at least one of the at least one stored associated event codes (105) is the photon-number code (105) comprising information on the number of detected photons of the respective detection event.

10. Method for recording photon-number-resolved detection events detected by a photon-number-resolving detector (1) with a system according to one of the claims 1 to 9, comprising the steps of:
- Providing a detection signal (100, 101) from the photon-number-resolving detector (1) to the plurality of comparators (5);
- Generating a detection-event for each detection signal (100, 101) of the photon-number-resolving detector (1), wherein each detection-event comprises a time code (104) for the detection signal and a photon-number code (105) comprising the number of coinciding comparator-signals (102) from the comparators (5);
- Recording the time code (104) and the photon-number code (105) for each detection event.

11. Method according to claim 10, wherein a synchronization pulse from a pulsed light source is provided, wherein the time code (104) for a detection event following or preceding the synchronization pulse comprises an information about the time interval between the synchronization pulse and the detection event, wherein the time code also comprises an information about an elapsed experiment time.

12. Method according to claim 11, wherein a frequency distribution of a photon number with respect to a detection event-preceding synchronization pulse is generated, wherein from the photon-number code (105) of a detection event the number of photons of the detection event is estimated and added to the frequency distribution.

13. Method for adjusting the reference values of the plurality of comparators (5) for a time-correlated photon-resolved counting measurement performed on a system according to claims 1 to 9, wherein the system has at least N comparators, N being a natural number greater one, the method comprising the steps of:
- Providing a photon stream of constant flux to the photon-number-resolving detector (1);
- Determining a rate of incident photons on the photon-number-resolving detector (1);
- Estimating from the rate of incident photons a temporal inter-photon distribution;
- Estimating from the distribution N probabilities to detect M photons in a predefined time interval, wherein each probability of the N probabilities is estimated for a different value of M, M being a natural number, for example between 1 to N.
- For each probability and its associated photon number M, adjusting the reference value (V_{ref}) of one of the N comparators (5) such that the ratio between the generated number of comparator-signals (102) from the one comparator and the determined count rate equals the respective probability.

## Patentansprüche

1. System für zeitkorrelierte photonenzahlaufgelöste Zählanwendungen, wobei das System die folgenden Komponenten umfasst:
- Einen Photonenzahl-auflösenden Detektor (1), der verbunden ist mit
- Einer Vielzahl von Komparatoren (5), wobei jeder Komparator (5) auf einen anderen Referenzwert (V_{ref}) eingestellt ist, wobei jeder Komparator (5) dazu ausgebildet ist, dass er ein Komparatorsignal (102) ausgibt, falls der Modul eines empfangenen Detektionssignals (100, 101) von dem Photonenzahl-auflösenden Detektor (1) den Modul des Referenzwertes (V_{ref}) des Komparators (5) überschreitet;
- Eine Umwandlungselektronik (8) welche dazu ausgebildet ist, die Komparatorsignale (102) von der Vielzahl von Komparatoren (5) zu empfangen und ein digitales Detektionsereignis für jedes Detektionssignal (100) des Photonenzahl-auflösenden Detektors (1) zu erzeugen, wobei jedes Detektionsereignis einen Zeitcode (104) für das Detektionsereignis umfasst, der eine Zeitinformation des Detektionssignals (100) und einen zugehörigen Photonenzahlcode (105) umfasst, der aus der Anzahl übereinstimmender Komparatorsignale (5) erhalten wird;
- eine Aufzeichnungselektronik (9), wobei die Aufzeichnungselektronik (9) dazu ausgebildet ist, den Zeitcode (104) des Detektionsereignisses und den zugehörigen Photonenzahlencode (105) aufzuzeichnen,
wobei die Referenzwerte (V_{ref}) der Komparatoren (5) so eingestellt sind, dass eine Photonenzahl für jedes Detektionssignal (100) durch das System aufgelöst werden kann.

2. System nach Anspruch 1, wobei die Aufzeichnungselektronik (9) dazu ausgebildet ist, eine digitale Dateistruktur aufzuzeichnen, wobei die Dateistruktur die Zeitcodes (104) der Detektionsereignisse und die zugehörigen Photonenzahlcodes (105) umfasst und/oder wobei die Aufzeichnungselektronik (9) dazu ausgebildet ist, die Zeitcodes und die zugehörigen Detektionsereignisse weiterzuverarbeiten und insbesondere eine grafische Darstellung der verarbeiteten Zeitcodes und zugehörigen Detektionsereignisse, insbesondere in Echtzeit, anzuzeigen.

3. System nach Anspruch 1 oder 2, wobei die Umwandlungselektronik (8) eine Vielzahl von Time-to-Digital-Convertern (TDCs) (6) umfasst, wobei jeder TDC (6) mit einem der Komparatoren (5) verbunden ist und dazu ausgebildet ist, einen digitalen TDC-Ereignis-Zeitcode (103) für jedes Komparatorsignal (102) des jeweiligen Komparators (5) bereitzustellen.

4. System nach Anspruch 3, wobei die Umwandlungselektronik (8) ferner einen Koinzidenzdetektor (81) und einen Photonenzahlcodierer (82) umfasst, die mit der Vielzahl von TDCs (6) verbunden sind, wobei der Koinzidenzdetektor (81) dazu ausgebildet ist, den Zeitcode (104) des Detektionsereignisses zu erzeugen, und der Photonenzahlcodierer (82) den Photonenzahlcode (105) des Detektionsereignisses erzeugt, wobei der Koinzidenzdetektor (81) den Zeitcode (104) des Detektionsereignisses aus übereinstimmenden TDC-Ereignis-Zeitcodes (103) der Mehrzahl von TDCs (6) erzeugt.

5. System nach Anspruch 1 oder 2, wobei die Vielzahl von Komparatoren (5) mit einem Signalspeicher (13) verbunden sind, wobei der Photonenzahl-auflösende Detektor (1) auch mit einer Triggerelektronik (11) verbunden ist, die dazu ausgebildet ist, ein Detektionssignal von dem Photonenzahl-auflösenden Detektor (1) zu identifizieren, wobei die Triggerelektronik (11) mit einem gemeinsamen Time-to-Digital-Converter (TDC) (12) und dem Signalspeicher (13) verbunden ist, wobei die Triggerelektronik (11) dazu ausgebildet ist, Triggerimpulse (107) an den gemeinsamen TDC (12) und den Signalspeicher (13) zu liefern, wobei der gemeinsame TDC (12) für jeden Triggerimpuls (107) den digitalen Zeitcode (104) des Detektionsereignisses erzeugt und den Zeitcode (104) des Detektionsereignisses der Aufzeichnungselektronik (9) bereitstellt und wobei der Signalspeicher (13) für jeden Triggerimpuls (107), insbesondere gleichzeitig mit der Erzeugung des Zeitcodes (104) des Detektionsereignisses, die Komparatorsignale (102) der Vielzahl von mit dem Signalspeicher (13) verbundenen Komparatoren (5) registriert und die KomparatorSignale (102) einem Photonenzahl-Codierer (82) zuführt, wobei der Photonenzahl-Codierer (28) dazu ausgebildet ist, den Photonenzahl-Code (105) des Detektionsereignisses zu erzeugen.

6. System nach einem der vorhergehenden Ansprüche, wobei das System eine Anregungslichtquelle umfasst, die so angeordnet und dazu ausgebildet ist, dass sie eine lumineszierende oder fluoreszierende Probe mit Anregungslicht anregt.

7. System nach Anspruch 6, wobei das System ferner ein Lumineszenz-Detektionssystem umfasst, das einen optischen Filter umfasst, der so angeordnet und dazu ausgebildet ist, dass er das Anregungslicht aus Lumineszenzlicht der lumineszierenden Probe filtert, wobei das Detektionssystem ferner den Photonenzahl-auflösenden Detektor (1) umfasst, der so angeordnet ist, dass der Photonenzahl-auflösende Detektor (1) das gefilterte Lumineszenzlicht von der Probe detektieren kann.

8. System nach Anspruch 6 oder 7, wobei die Anregungslichtquelle eine gepulste Anregungslichtquelle ist, wobei das System und insbesondere die Lichtquelle dazu ausgebildet ist, einen Synchronisationsimpuls zu erzeugen, der dazu ausgebildet ist, anzuzeigen, dass ein Lichtimpuls der Anregungsquelle erzeugt worden ist, und den Synchronisationsimpuls an die Umwandlungselektronik (8) zu liefern, um den Zeitcode (104) für ein Detektionsereignis zu erzeugen, das dem Synchronisationsimpuls folgt oder vorausgeht.

9. System nach einem der vorhergehenden Ansprüche, wobei das System dazu ausgebildet ist, zeitkorrelierte photonenzahlaufgelöste Zähldaten in einer digitalen Dateistruktur zu speichern, wobei die Dateistruktur auf einem nicht-transitorischen computerlesbaren Medium (10) gespeichert ist, wobei die Dateistruktur umfasst:
- einen Dateikopfteil;
- lediglich ereignisbasierte Zeitcodes (104), so dass zu jedem Zeitcode (104) mindestens ein zugehöriger Ereigniscode (105) gespeichert ist, wobei mindestens einer des mindestens einen gespeicherten zugehörigen Ereigniscodes (105) der Photonenzahlencode (105) ist, der Informationen über die Anzahl der detektierten Photonen des jeweiligen Detektionsereignisses umfasst.

10. Verfahren zur Aufzeichnung von photonenzahlaufgelösten Detektionsereignissen, die von einem Photonenzahl-auflösenden Detektor (1) mit einem System nach einem der Ansprüche 1 bis 9 detektiert werden, umfassend die Schritte:
- Bereitstellen eines Detektionssignals (100, 101) von dem Photonenzahl-auflösenden Detektor (1) an die Vielzahl von Komparatoren (5);
- Erzeugen eines Detektionsereignisses für jedes Detektionssignal (100, 101) des Photonenzahl-auflösenden Detektors (1), wobei jedes Detektionsereignis einen Zeitcode (104) für das Detektionssignal und einen Photonenzahlcode (105) umfasst, der die Anzahl der übereinstimmenden Komparatorsignale (102) von den Komparatoren (5) umfasst;
- Aufzeichnen des Zeitcodes (104) und des Photonenzahlencodes (105) für jedes Detektionsereignis.

11. Verfahren nach Anspruch 10, wobei ein Synchronisationsimpuls von einer gepulsten Lichtquelle bereitgestellt wird, wobei der Zeitcode (104) für ein Detektionsereignis, das dem Synchronisationsimpuls folgt oder vorausgeht, eine Information über das Zeitintervall zwischen dem Synchronisationsimpuls und dem Detektionsereignis umfasst, wobei der Zeitcode auch eine Information über eine verstrichene Experimentierzeit umfasst.

12. Verfahren nach Anspruch 11, wobei eine Häufigkeitsverteilung einer Photonenzahl in Bezug auf einen dem Detektionsereignis vorangehenden Synchronisationsimpuls erzeugt wird, wobei aus dem Photonenzahlcode (105) eines Detektionsereignisses die Anzahl der Photonen des Detektionsereignisses geschätzt und zu der Häufigkeitsverteilung addiert wird.

13. Verfahren zum Einstellen der Referenzwerte der Vielzahl von Komparatoren (5) für eine zeitkorrelierte photonenaufgelöste Zählmessung, die auf einem System nach einem der Ansprüche 1 bis 9 durchgeführt wird, wobei das System mindestens N Komparatoren aufweist, wobei N eine natürliche Zahl größer eins ist, wobei das Verfahren die folgenden Schritte umfasst:
- Bereitstellen eines Photonenstroms mit konstantem Fluss zum Photonenzahl-auflösenden Detektor (1);
- Bestimmen einer Rate von einfallenden Photonen auf den Photonenzahl-auflösenden Detektor (1);
- Schätzen einer zeitlichen Inter-Photonen-Verteilung aus der Rate der einfallenden Photonen;
- Schätzen von N Wahrscheinlichkeiten aus der Verteilung, M Photonen in einem vordefinierten Zeitintervall zu detektieren, wobei jede Wahrscheinlichkeit der N Wahrscheinlichkeiten für einen anderen Wert von M geschätzt wird, wobei M eine natürliche Zahl ist, zum Beispiel zwischen 1 und N.
- Für jede Wahrscheinlichkeit und ihre zugehörige Photonenzahl M, Einstellen des Referenzwerts (V_{ref}) eines der N Komparatoren (5), sodass das Verhältnis zwischen der erzeugten Anzahl von Komparatorsignalen (102) von dem einen Komparator und der ermittelten Zählrate gleich der jeweiligen Wahrscheinlichkeit ist.

## Revendications

1. Système pour applications de comptage à résolution de nombre de photons à corrélation temporelle, le système comprenant les composants suivants :
- un détecteur de résolution de nombre de photons (1) connecté à
- une pluralité de comparateurs (5), dans lequel chaque comparateur (5) est ajusté sur une valeur de référence différente (Vref), dans lequel chaque comparateur (5) est configuré pour émettre un signal de comparateur (102) au cas où le module d'un signal de détection reçu (100, 101) du détecteur de résolution de nombre de photons (1) dépasse le module de la valeur de référence (V_{ref}) du comparateur (5) ;
- une électronique de conversion (8) configurée pour recevoir les signaux de comparateur (102) de la pluralité de comparateurs (5) et pour générer un événement de détection numérique pour chaque signal de détection (100) du détecteur de résolution de nombre de photons (1), dans lequel chaque événement de détection comprend un code temporel (104) pour l'événement de détection comprenant une information temporelle du signal de détection (100) et un code de nombre de photons associé (105) obtenu à partir du nombre de signaux de comparateur coïncidents (5) ;
- une électronique d'enregistrement (9), dans lequel l'électronique d'enregistrement (9) est configurée pour enregistrer le code temporel (104) de l'événement de détection et le code de nombre de photons associé (105),
dans lequel les valeurs de référence (V_{ref}) des comparateurs (5) sont ajustées de sorte qu'un nombre de photons pour chaque signal de détection (100) peut être résolu par le système.

2. Système selon la revendication 1, dans lequel l'électronique d'enregistrement (9) est configurée pour enregistrer une structure de fichiers numériques, dans lequel la structure de fichiers comprend les codes temporels (104) des événements de détection et les codes de nombre de photons associés (105) et/ou dans lequel l'électronique d'enregistrement (9) est configurée pour traiter davantage les codes temporels et les événements de détection associés et notamment pour afficher une représentation graphique des codes temporels et événements de détection associés traités, notamment en temps réel.

3. Système selon la revendication 1 ou 2, dans lequel l'électronique de conversion (8) comprend une pluralité de convertisseurs temps-numériques (TDC) (6), chaque TDC (6) étant connecté à un des comparateurs (5), et configuré pour fournir un code temporel d'événement de TDC numérique (103) pour chaque signal de comparateur (102) du comparateur respectif (5).

4. Système selon la revendication 3, dans lequel l'électronique de conversion (8) comprend en outre un détecteur de coïncidence (81) et un encodeur de nombre de photons (82) connectés à la pluralité de TDC (6), dans lequel le détecteur de coïncidence (81) est configuré pour générer le code temporel (104) de l'événement de détection et l'encodeur de nombre de photons (82) génère le code de nombre de photons (105) de l'événement de détection, dans lequel le détecteur de coïncidence (81) génère le code temporel (104) de l'événement de détection à partir de codes temporels d'événement de TDC coïncidents (103) de la pluralité de TDC (6).

5. Système selon la revendication 1 ou 2, dans lequel la pluralité de comparateurs (5) sont connectés à une bascule (13), dans lequel le détecteur de résolution de nombre de photons (1) est également connecté à une électronique de déclenchement (11) configurée pour identifier un signal de détection provenant du détecteur de résolution de nombre de photons (1), dans lequel l'électronique de déclenchement (11) est connectée à un convertisseur temps-numérique commun (TDC) (12) et à la bascule (13), dans lequel l'électronique de déclenchement (11) est configurée pour fournir des impulsions de déclenchement (107) au TDC commun (12) et à la bascule (13), dans lequel pour chaque impulsion de déclenchement (107), le TDC commun (12) génère le code temporel numérique (104) de l'événement de détection et fournit le code temporel (104) de l'événement de détection à l'électronique d'enregistrement (9), et dans lequel pour chaque impulsion de déclenchement (107), la bascule (13), notamment simultanément à la génération du code temporel (104) de l'événement de détection, enregistre les signaux de comparateur (102) de la pluralité de comparateurs (5) connectés à la bascule (13) et fournit les signaux de comparateur (102) à un encodeur de nombre de photons (82), dans lequel l'encodeur de nombre de photons (28) est configuré pour générer le code de nombre de photons (105) de l'événement de détection.

6. Système selon une des revendications précédentes, dans lequel le système comprend une source de lumière d'excitation agencée et configurée pour exciter un échantillon luminescent ou fluorescent avec de la lumière d'excitation.

7. Système selon la revendication 6, dans lequel le système comprend en outre un système de détection de luminescence, comprenant un filtre optique agencé et configuré pour filtrer la lumière d'excitation de lumière luminescente de l'échantillon luminescent, le système de détection comprenant en outre le détecteur de résolution de nombre de photons (1) agencé de sorte que le détecteur de résolution de nombre de photons (1) peut détecter la lumière luminescente filtrée provenant de l'échantillon.

8. Système selon la revendication 6 ou 7, dans lequel la source de lumière d'excitation est une source de lumière d'excitation puisée, dans lequel le système et notamment la source de lumière est configuré pour générer une impulsion de synchronisation configurée pour indiquer qu'une impulsion lumineuse de la source d'excitation a été générée et pour fournir l'impulsion de synchronisation à l'électronique de conversion (8) pour générer le code temporel (104) pour un événement de détection suivant ou précédant l'impulsion de synchronisation.

9. Système selon une des revendications précédentes, dans lequel le système est configuré pour stocker des données de comptage à résolution de nombre de photons à corrélation temporelle dans une structure de fichiers numériques, la structure de fichiers étant stockée sur un support non transitoire lisible par ordinateur (10), dans lequel la structure de fichiers comprend
- une portion d'en-tête de fichier ;
- des codes temporels basés sur un événement (104) uniquement, de sorte qu'au moins un code d'événement associé (105) est stocké sur chaque code temporel (104), dans lequel au moins un de l'au moins un code d'événement associé stocké (105) est le code de nombre de photons (105) comprenant des informations sur le nombre de photons détectés de l'événement de détection respectif.

10. Procédé d'enregistrement d'événements de détection à résolution de nombre de photons détectés par un détecteur de résolution de nombre de photons (1) avec un système selon une des revendications 1 à 9, comprenant les étapes consistant à :
- fournir un signal de détection (100, 101) provenant du détecteur de résolution de nombre de photons (1) à la pluralité de comparateurs (5) ;
- générer un événement de détection pour chaque signal de détection (100, 101) du détecteur de résolution de nombre de photons (1), dans lequel chaque événement de détection comprend un code temporel (104) pour le signal de détection et un code de nombre de photons (105) comprenant le nombre de signaux de comparateur coïncidents (102) provenant des comparateurs (5) ;
- enregistrer le code temporel (104) et le code de nombre de photons (105) pour chaque événement de détection.

11. Procédé selon la revendication 10, dans lequel une impulsion de synchronisation provenant d'une source de lumière pulsée est fournie, dans lequel le code temporel (104) pour un événement de détection suivant ou précédant l'impulsion de synchronisation comprend une information concernant l'intervalle de temps entre l'impulsion de synchronisation et l'événement de détection, dans lequel le code temporel comprend également une information concernant une durée d'expérience écoulée.

12. Procédé selon la revendication 11, dans lequel une distribution de fréquences d'un nombre de photons par rapport à une impulsion de synchronisation précédant un événement de détection est générée, dans lequel à partir du code de nombre de photons (105) d'un événement de détection, le nombre de photons de l'événement de détection est estimé et ajouté à la distribution de fréquences.

13. Procédé d'ajustement des valeurs de référence de la pluralité de comparateurs (5) pour une mesure de comptage à résolution de photons à corrélation temporelle réalisée sur un système selon les revendications 1 à 9, dans lequel le système a au moins N comparateurs, N étant un nombre naturel supérieur à un, le procédé comprenant les étapes consistant à :
- fournir un courant de photons de flux constant au détecteur de résolution de nombre de photons (1) ;
- déterminer un taux de photons incidents sur le détecteur de résolution de nombre de photons (1) ;
- estimer à partir du taux de photons incidents une distribution inter-photons temporelle ;
- estimer à partir de la distribution N probabilités de détecter M photons dans un intervalle de temps prédéfini, dans lequel chaque probabilité des N probabilités est estimée pour une valeur différente de M, M étant un nombre naturel, par exemple compris entre 1 et N ;
- pour chaque probabilité et son nombre de photons associé M, ajuster la valeur de référence (V_{ref}) d'un des N comparateurs (5) de sorte que le rapport entre le nombre généré de signaux de comparateur (102) provenant du comparateur en question et le taux de compte déterminé est égal à la probabilité respective.
